# FASCICULE DE BREVET EUROPEEN

(11) **EP 3 472 882 B1**
(45) Date de publication et mention de la délivrance du brevet: **01.07.2020**
(21) Numéro de dépôt: 17736996.4
(22) Date de dépôt: 16.06.2017
(51) Int. Cl.: H01M 4/13, H01M 4/139, H01M 4/38, H01M 4/62, H01M 10/052, H01M 4/04

(54) **PROCEDE DE FABRICATION D'UNE STRUCTURE FAISANT OFFICE D'ELECTRODE POSITIVE ET DE COLLECTEUR DE COURANT POUR ACCUMULATEUR ELECTROCHIMIQUE LITHIUM-SOUFRE**
VERFAHREN ZUR HERSTELLUNG EINER ALS POSITIVELEKTRODE UND ALS STROMABNEHMER WIRKENDEN STRUKTUR FÜR EINEN ELEKTROCHEMISCHEN LITHIUM-SCHWEFEL-AKKUMULATOR
PROCESS FOR MANUFACTURING A STRUCTURE ACTING AS A POSITIVE ELECTRODE AND AS A CURRENT COLLECTOR FOR A LITHIUM-SULFUR ELECTROCHEMICAL ACCUMULATOR

(30) Priorité: 17.06.2016 FR 1655661
(43) Date de publication de la demande: 24.04.2019
(73) Titulaire: Commissariat à l'Énergie Atomique et aux Énergies Alternatives, 75015 Paris (FR)
(72) Inventeur: BARCHASZ, Céline, 38600 Fontaine (FR); BOLLOLI, Marco, 38100 Grenoble (FR); VINCENT, Rémi, 38000 Grenoble (FR)
(74) Mandataire: Brevalex
(86) Numéro de dépôt international: PCT/FR2017/051586
(87) Numéro de publication internationale: WO 2017/216501

(56) Documents cités:
- US-A- 6 136 470
- US-A1- 2013 202 961
- US-A1- 2014 234 723
- US-A1- 2014 255 797

## Description

### DOMAINE TECHNIQUE

La présente invention a trait à un procédé de préparation d'une structure faisant office d'électrode positive et de collecteur de courant pour accumulateur électrochimique lithium-soufre.

La présente invention a également trait à un accumulateur électrochimique lithium-soufre comprenant une telle structure.

Le domaine général de l'invention peut ainsi être défini comme celui des dispositifs de stockage d'énergie, en particulier celui des accumulateurs électrochimiques au lithium et, encore plus particulièrement, des accumulateurs électrochimiques au lithium-soufre.

### ÉTAT DE LA TECHNIQUE ANTÉRIEURE

Les dispositifs de stockage d'énergie sont classiquement des accumulateurs électrochimiques fonctionnant sur le principe de cellules électrochimiques aptes à délivrer un courant électrique grâce à la présence dans chacune d'entre elles d'un couple d'électrodes (respectivement, une électrode positive et une électrode négative) séparé par un électrolyte, les électrodes comprenant des matériaux spécifiques aptes à réagir selon une réaction d'oxydoréduction, moyennant quoi il y a production d'électrons à l'origine du courant électrique et productions d'ions qui vont circuler d'une électrode à l'autre par le biais d'un électrolyte.

Des accumulateurs souscrivant à ce principe actuellement les plus usités sont les suivants :
*les accumulateurs Ni-MH utilisant de l'hydrure métallique et de l'oxyhydroxyde de nickel comme matériaux d'électrode ;
*les accumulateurs Ni-Cd utilisant du cadmium et de l'oxyhydroxyde de nickel comme matériaux d'électrode ;
*les accumulateurs Acide-Plomb utilisant du plomb et de l'oxyde de plomb PbO₂ comme matériaux d'électrode ; et
*les accumulateurs au lithium, tels que les accumulateurs lithium-ion, utilisant classiquement, en tout ou partie, des matériaux lithiés comme matériaux d'électrode.

Du fait que le lithium est un élément solide particulièrement léger et présente un potentiel électrochimique le plus faible, permettant ainsi l'accès à une densité d'énergie massique intéressante, les accumulateurs au lithium ont détrôné largement les autres accumulateurs mentionnés ci-dessus du fait de l'amélioration continue des performances des accumulateurs Li-ion en termes de densité d'énergie. En effet, les accumulateurs lithium-ion permettent d'obtenir des densités d'énergie massique et volumique (pouvant atteindre aujourd'hui près de 200 Wh.kg⁻¹) nettement supérieures à celles des accumulateurs Ni-MH et Ni-Cd (pouvant aller de 50 et 100 Wh.kg⁻¹) et Acide-plomb (pouvant aller de 30 à 35 Wh.kg⁻¹). Qui plus est, les accumulateurs Li-ion peuvent présenter une tension nominale de cellule supérieure à celle des autres accumulateurs (par exemple, une tension nominale de l'ordre de 3,6 V pour une cellule mettant en œuvre comme matériaux d'électrode le couple LiCoO₂/graphite contre une tension nominale de l'ordre de 1,5 V pour les autres accumulateurs susmentionnés). La densité d'énergie est d'environ 300 à 500 Wh.l⁻¹ et de 160 à 200 Wh.kg⁻¹. Ces systèmes présentent également une faible autodécharge et une durée de vie élevée (allant de 500 à 1000 cycles, par exemple).

De par leurs propriétés intrinsèques, les accumulateurs Li-ion s'avèrent donc particulièrement intéressants pour les domaines où l'autonomie est un critère primordial, tel que cela est le cas des domaines de l'informatique, de la vidéo, de la téléphonie, des transports tels que les véhicules électriques, les véhicules hybrides, ou encore des domaines médicaux, spatiaux, de la microélectronique. Toutefois, la technologie des accumulateurs lithium-ion voit aujourd'hui ses performances plafonner.

Actuellement, une nouvelle technologie d'accumulateur à base de lithium se profile comme une alternative prometteuse, cette technologie étant la technologie lithium/soufre, dans laquelle l'électrode positive comprend, comme matériau actif, du soufre élémentaire ou un dérivé du soufre, tel que du sulfure de lithium ou un polysulfure de lithium.

L'utilisation du soufre, comme matériau actif, d'une électrode positive est particulièrement attractive, car le soufre présente une capacité spécifique théorique très élevée pouvant être jusqu'à plus de 10 fois supérieure à celle obtenue pour des matériaux conventionnels d'électrode positive (de l'ordre de 1675 mAh/g au lieu de 140 mAh/g pour LiCoO₂). Qui plus est, le soufre est présent, de manière abondante, sur la planète et se caractérise, de ce fait par des coûts faibles. Enfin, il est peu toxique. Toutes ces qualités contribuent à le rendre particulièrement attractif en vue d'une mise en place à grande échelle, notamment pour les véhicules électriques, ce d'autant plus que les accumulateurs lithium/soufre peuvent permettre d'atteindre des densités d'énergie massique pouvant aller de 300 à 600 Wh.g⁻¹.

D'un point de vue fonctionnel, la réaction à l'origine de la production de courant (c'est-à-dire lorsque l'accumulateur est en mode de décharge) met en jeu une réaction d'oxydation du lithium à l'électrode négative qui produit des électrons, qui vont alimenter le circuit extérieur auquel sont reliées les électrodes positive et négative, et une réaction de réduction du soufre à l'électrode positive.

Ainsi, de manière explicite, en processus de décharge, la réaction globale est la suivante :

S₈ + 16Li → 8Li₂S

qui est la somme de la réaction de réduction du soufre à l'électrode positive (S₈ + 16e⁻ → 8S²⁻) et de la réaction d'oxydation du lithium à l'électrode négative (Li → Li⁺ + e⁻).

Il est entendu que les réactions électrochimiques inverses se produisent lors du processus de charge.

Comme il ressort de l'équation ci-dessus, la réaction implique un échange de 16 électrons, ce qui justifie la capacité spécifique élevée du soufre (1675 mAh.g⁻¹).

D'un point de vue mécanistique, et sans être lié par la théorie, à l'état initial (c'est-à-dire lorsque la batterie est à l'état de charge complet), la matière active, qui est du soufre élémentaire, est présente à l'état solide dans l'électrode positive. Au cours de la réduction du soufre, c'est-à-dire au cours de la décharge, les molécules cycliques de soufre sont réduites et forment des chaînes linéaires de polysulfures de lithium, de formule générale Li₂Sₙ, avec n pouvant aller de 2 à 8. Puisque la molécule de départ est S₈, les premiers composés formés sont les polysulfures de lithium à chaînes longues, tels que Li₂S₈ ou Li₂S₆. Ces polysulfures de lithium étant solubles dans les électrolytes organiques, la première étape de décharge consiste donc en la solubilisation de la matière active dans l'électrolyte, et la production de polysulfures de lithium à chaînes longues en solution. Puis, au fur et à mesure que la réduction du soufre se poursuit, la longueur de chaîne des polysulfures est graduellement réduite, et des composés tels que Li₂S₅, Li₂S₄ ou encore Li₂S₂ sont formés en solution. Enfin, le produit final de réduction est le sulfure de lithium (Li₂S), qui, lui, est insoluble dans les électrolytes organiques. Ainsi, la dernière étape du mécanisme de réduction du soufre consiste en la précipitation du matériau actif soufré.

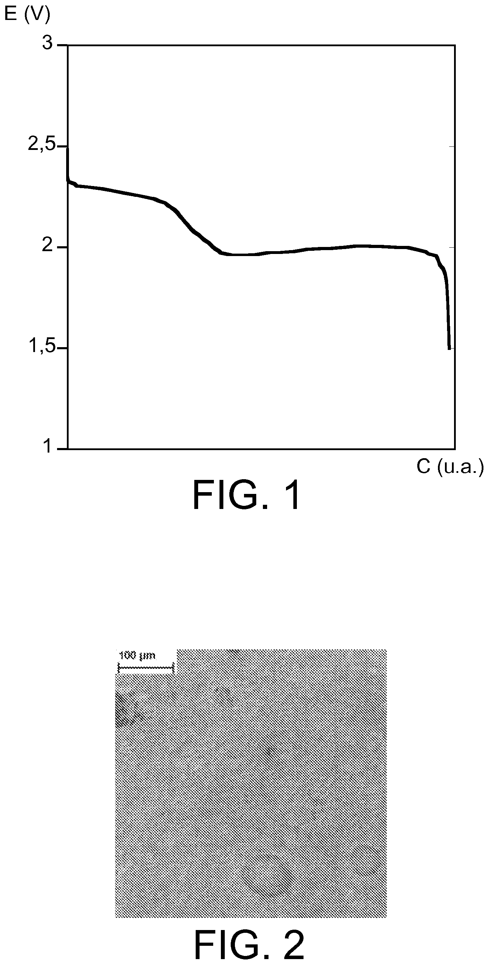

Ce mécanisme peut être corrélé au profil de décharge illustré sur la figure 1, qui représente un graphique illustrant l'évolution du potentiel E (en V) en fonction de la capacité C (en u.a).

En effet, dans ce profil, le premier plateau peut être attribué à la formation des chaînes longues de polysulfures de lithium, alors que le second plateau correspond à la réduction de la taille des chaînes soufrées, jusqu'à passivation de l'électrode positive.

Toutefois, les accumulateurs lithium-soufre présentent un certain nombre d'inconvénients.

La première limitation est d'ordre cinétique, puisque le soufre est un matériau isolant. Le soufre est également soluble dans les électrolytes organiques employés. Ainsi solubilisé, il peut contribuer à engendrer la corrosion de l'électrode négative de lithium et est responsable de l'autodécharge importante des accumulateurs lithium-soufre.

Les intermédiaires polysulfures sont également solubles dans l'électrolyte et susceptibles de réagir avec l'électrode négative. Ils favorisent donc aussi l'autodécharge de l'accumulateur. En outre, ils sont responsables de la mise en place d'un mécanisme navette qui se produit en charge, et qui entraîne la dégradation des performances de l'accumulateur, notamment en termes d'efficacité coulombique. Enfin, le produit de décharge Li₂S est, quant à lui, insoluble dans l'électrolyte et isolant électronique. Il précipite donc en fin de décharge et passive la surface des électrodes, qui deviennent alors inactives. De ce fait, les capacités pratiques obtenues peuvent être généralement très en-deçà de la capacité théorique, de l'ordre de 300 à 1000 mAh.g⁻¹ (la capacité théorique étant de l'ordre de 1675 mAh.g⁻¹).

Aussi, des améliorations sont à apporter concernant l'architecture des accumulateurs, par exemple, au niveau de l'électrode positive à base de soufre, de l'électrolyte, du séparateur et de l'électrode négative.

D'un point de vue structurel, un accumulateur lithium/soufre comprend, classiquement, au moins une cellule électrochimique comportant deux électrodes à base de matériaux différents (une électrode positive comprenant, comme matériau actif, du soufre élémentaire et une électrode négative comprenant, comme matériau actif, du lithium métallique), entre lesquelles est disposé un électrolyte liquide organique.

Concernant l'électrode positive comprenant du soufre, celle-ci est classiquement obtenue par un procédé d'enduction sur un substrat qui constitue le collecteur de courant, pour donner un ensemble formé de deux pièces constituées par le collecteur de courant et l'électrode positive en tant que telle. Plus spécifiquement, il est réalisé, dans un premier temps, une encre comprenant un solvant, le matériau actif, un matériau carboné (pour améliorer la conductivité électronique globale de l'électrode) et un liant. L'encre est déposée, dans un deuxième temps, sur un substrat destiné à constituer le collecteur de courant, qui est, généralement, une feuille métallique (comme un feuillard en aluminium). Après évaporation du solvant et séchage, une électrode de soufre déposée sur une collecteur de courant est ainsi obtenue, l'ensemble résultant étant ensuite incorporé dans une cellule comprenant un séparateur imprégné d'électrolyte liquide organique, une électrode négative, l'électrode négative et l'électrode positive étant disposées, de part et d'autre du séparateur. Le pourcentage de soufre dans l'électrode est généralement important, généralement de 50 à 90% et, préférentiellement supérieure à 70% en masse, de sorte à obtenir des accumulateurs à forte densité d'énergie.

Le mécanisme de décharge d'un accumulateur lithium-soufre utilisant une telle électrode positive passe tout d'abord par une étape de dissolution du matériau actif, ce qui entraîne un effondrement de la structure initiale de l'électrode poreuse en raison du pourcentage important de soufre dans l'électrode. Après dissolution du soufre, la porosité de l'électrode est telle que la structure ne peut être maintenue et s'effondre. La surface disponible d'électrode est ainsi diminuée, et des grains de matériau, ou de composite carbone/liant, peuvent être désolidarisés du support constitué par le collecteur de courant. Cet endommagement, et perte de surface active résultante, s'avère cruciale en fin de décharge, car les espèces formées (Li₂S₂, Li₂S, ...) sont à la fois très isolantes et insolubles dans l'électrolyte organique. Par conséquent, elles précipitent à l'électrode positive et sont responsables de sa passivation progressive. Or, l'épaisseur de matière déposée étant limitée à quelques nanomètres (Li₂S isolant et donc passivant), le dépôt d'une quantité importante de matériau actif dépend donc de la surface spécifique conductrice d'électrode disponible.

De plus, le composé final de décharge Li₂S est deux fois plus volumineux que le soufre, ce qui peut également contribuer à la pulvérisation de la structure d'électrode positive en fin de décharge. En conclusion, les cycles de dissolution/précipitation du matériau actif, inhérents au mécanisme de décharge, sont donc responsables de la faible capacité pratique restituée et de la faible tenue en cyclage des accumulateurs lithium-soufre.

Pour essayer de résoudre ce problème, et notamment celui ayant trait à la désolidarisation entre l'électrode positive et le substrat collecteur de courant, il a été proposé d'utiliser comme collecteur de courant un tissu poreux, dans lequel est déposé le matériau actif.

Ainsi, le document WO 2007/118281 décrit une architecture d'électrode pour dispositifs de stockage électrochimique, dans laquelle le collecteur de courant est constitué d'un substrat en tissu, sur lequel une encre d'électrode, contenant la matière active, est appliquée. Ce mode de réalisation impose d'utiliser un collecteur de courant préexistant et généralement disponible commercialement. Qui plus est, de par sa constitution en tissu, le collecteur de courant est plus lourd, par exemple, qu'un collecteur en aluminium, ce qui induit une diminution en densité d'énergie.

Par ailleurs, le document WO 2012/038634 décrit un procédé de fabrication d'électrodes positive et négatives de porosité entre 70% et 85% par dépôt d'une encre contenant le matériau actif et ayant comme liant le poly(acide acrylique) sur un tissu en fibres de carbone. Les mêmes inconvénients que ceux décrits pour le document WO 2007/118281 se retrouvent ici. US6136470 décrit un procédé de fabrication d'une électrode utilisant un substrat amovible et US20140255797 décrit une batterie lithium soufre.

Au vu de ce qui existe, les auteurs de la présente invention se sont donc proposé de mettre au point un nouveau procédé de préparation d'une structure comprenant une électrode positive pour batterie lithium-soufre, qui permette, notamment, de s'affranchir de l'utilisation d'un collecteur de courant distinct.

### EXPOSÉ DE L'INVENTION

L'objet de l'invention est défini dans les revendications. Ainsi, l'invention a trait à un procédé de préparation d'une structure faisant office, à la fois, d'électrode positive pour batterie lithium-soufre et de collecteur de courant comprenant les opérations suivantes :
- dépôt d'une ou plusieurs compositions liquides comprenant les ingrédients constitutifs de cette structure sur un substrat amovible ;
- séchage de la ou les compositions déposées ;
- séparation du substrat amovible de la structure ainsi obtenue, laquelle constitue la structure faisant office, à la fois, d'électrode positive pour batterie lithium-soufre et de collecteur de courant.

Avantageusement :
- lorsque la structure est destinée à entrer dans la constitution d'un accumulateur lithium-soufre fonctionnant dans une configuration du type « catholyte », le dépôt consiste à déposer sur le substrat amovible une seule composition liquide comprenant les ingrédients constitutifs de ladite structure ; ou
- lorsque la structure contient en son sein un matériau actif soufré, le dépôt consiste à déposer sur le substrat amovible une seule composition comprenant les ingrédients constitutifs de ladite structure, y compris, dans ce cas, un matériau actif soufré ; ou
- lorsque la structure contient en son sein un matériau actif soufré, le dépôt consiste à déposer sur le substrat amovible une première composition comprenant les ingrédients constitutifs de ladite structure hormis le matériau actif soufré et une deuxième composition comprenant le matériau actif soufré, un séchage pouvant être intercalé entre les deux compositions déposées ; ou
- lorsque la structure contient en son sein un matériau actif soufré, le dépôt consiste à déposer sur le substrat amovible une composition comprenant les ingrédients constitutifs de ladite structure hormis le matériau actif soufré, le matériau actif soufré étant introduit dans la structure après séparation du substrat amovible.

Le procédé de l'invention, de par sa souplesse, peut permettre d'accéder aux avantages suivants :
- la possibilité, grâce au choix des ingrédients, de régler la morphologie de la structure finale obtenue, afin d'atteindre le meilleur compromis entre la porosité de l'électrode et la surface disponible pour le dépôt d'espèces en fin de décharge, entraînant ainsi une amélioration de la capacité pratique restituée ;
- la possibilité d'ajuster la rigidité de ces structures, toujours grâce à un choix judicieux d'ingrédients, afin d'apporter une tenue mécanique à l'électrode positive, de telle sorte que la quantité de matière déposée à chaque fin de décharge puisse être constante, améliorant ainsi la tenue lors des cycles de charge-décharge ;
- l'affranchissement des supports commerciaux, pour constituer le collecteur de courant, ce qui amène un avantage en termes de coût et de densité d'énergie ; et
- une haute vitesse de production et la possibilité de changer facilement la géométrie des électrodes, en jouant notamment sur la géométrie du substrat amovible, qui sert de substrat de dépôt.

Quelles que soient les modalités spécifiques du procédé, les ingrédients constitutifs de ladite structure peuvent être les suivants :
- au moins un additif carboné inorganique, qui peut assurer, outre diverses fonctions, la fonction de collecteur de courant ;
- au moins un liant polymérique ;
- éventuellement, au moins un matériau actif soufré, notamment, lorsque l'électrode est destinée à une batterie ne fonctionnant pas sur le mode catholyte (ce qui signifie que le matériau actif soufré est contenu dans l'électrolyte destiné à être contact avec l'électrode).

Concernant les additifs carbonés inorganiques, ils peuvent être choisis parmi les fibres de carbone, les poudres de carbone et les mélanges de celles-ci.

A titre d'exemples de fibres de carbone, on peut citer les fibres de carbone broyées, les fibres de carbone obtenues en phase vapeur et les mélanges de celles-ci.

Les fibres de carbone broyées peuvent présenter notamment une longueur allant de 100 µm à 1 mm.

Les fibres de carbone obtenues en phase vapeur peuvent être celles vendues sous la marque VGCF®.

Les fibres de carbone utilisées présentent, avantageusement une longueur inférieure à celle des fibres couramment utilisées dans les procédés traditionnels pour la réalisation des tissés ou non-tissés (lesquelles fibres présentent une longueur de l'ordre de quelques mm). Elles permettent de régler la ténue mécanique et assurent la percolation électronique au sein de la structure.

Les poudres de carbone peuvent, plus spécifiquement, correspondre à du noir de carbone, tel que les noirs de carbone vendus sous les marques Ketjenblack® (AzkoNobel), Vulcan® (Cabot), Super-P® (Timcal).

Les poudres de carbone et éventuellement les fibres de carbone obtenues en phase vapeur permettent d'améliorer la conductivité électronique et sont responsables de la morphologie du réseau percolant électronique.

Les liants polymériques peuvent être, par exemple :
- des liants polymériques appartenant à la catégorie des polymères cellulosiques, tels que de la carboxyméthylcellulose (connu sous l'abréviation CMC), de la méthylcellulose (connu sous l'abréviation MC) ;
- des liants appartenant à la catégorie des polymères éthyléniques fluorés, tel que du polytétrafluoroéthylène (connu sous l'abréviation PTFE) ;
- des liants appartenant à la catégorie des polymères vinyliques, tels qu'un poly(alcool vinylique) (connu sous l'abréviation PVA) ; et
- des mélanges de ceux-ci.

Les liants polymériques peuvent remplir plusieurs rôles :
- ils augmentent la cohésion entre les différents ingrédients de la structure et notamment les additifs carbonés ;
- dans la ou les compositions, ils permettent de régler la viscosité de l'encre.

Plus spécifiquement, lorsqu'il s'agit du PTFE, il peut jouer le rôle d'agent filmogène, et garantir la tenue mécanique de la structure finale.

Enfin, le cas échéant, le matériau actif soufré peut être du soufre élémentaire (Ss) ou du disulfure de lithium (Li₂S).

La ou les compositions mentionnées dans l'étape a), peuvent comprendre au moins un tensioactif (tel que ceux commercialisés sous les marques SDS®, Triton®) et, éventuellement, un agent porogène (tel que celui commercialisé sous la marque AZB®).

Les agents tensioactifs permettent d'améliorer la dispersion des particules de carbone et les agents porogènes permettent de régler la structure poreuse obtenue.

Lorsqu'une composition destinée à être utilisée dans l'étape a) comprend, à la fois, des fibres de carbones, de la poudre de carbone, un liant polymérique, un tensioactif et éventuellement un agent porogène, les proportions de ces ingrédients dans la composition peuvent être les suivantes :
- de 35% à 80% en masse pour les fibres de carbone ;
- inférieure à 35% en masse pour les poudres de carbone ;
- de 5 à 30% en masse pour le liant polymérique ;
- de 8 à 10% en masse pour le tensioactif ; et
- inférieure à 10% en masse pour l'agent porogène,
le pourcentage en masse étant exprimé par rapport à la masse totale des ingrédients.

Selon un premier mode de réalisation avantageux, lorsque l'électrode est destinée à fonctionner dans une configuration du type catholyte, le dépôt peut consister à déposer sur le substrat amovible une seule composition liquide comprenant les ingrédients constitutifs de ladite structure, tel que ceux mentionnés ci-dessus, étant entendu que ces ingrédients ne contiennent pas de matériau actif soufré, vu que celui-ci est apporté via l'électrolyte destiné à être mis en contact avec la structure, une fois que celle-ci est assemblée dans une cellule d'accumulateur lithium-soufre.

Selon un deuxième mode de réalisation, lorsque la structure contient en son sein un matériau actif soufré, le procédé de l'invention peut comporter plusieurs variantes.

Selon une première variante avantageuse, le dépôt peut consister à déposer sur le substrat amovible une seule composition comprenant les ingrédients constitutifs de ladite structure (y compris, dans ce cas, un matériau actif soufré).

Selon une deuxième variante avantageuse, le dépôt peut consister à déposer sur le substrat amovible une première composition comprenant les ingrédients constitutifs de ladite structure hormis le matériau actif soufré et une deuxième composition comprenant le matériau actif soufré, un séchage pouvant être intercalé entre les deux compositions déposées.

Selon une troisième variante avantageuse, le dépôt peut consister à déposer sur le substrat amovible une composition comprenant les ingrédients constitutifs de ladite structure hormis le matériau actif soufré, le matériau actif soufré étant introduit dans la structure après séparation du substrat amovible, par exemple, par enduction ou sublimation.

Indépendamment des modes de réalisation et des variantes prévus, le procédé de l'invention peut comprendre, après le séchage, une étape de frittage sous air de la structure obtenue (en vue, par exemple, de la consolider) et/ou une étape d'imprégnation de la structure obtenue par une résine, par exemple, une résine phénolique, suivie d'une étape de carbonisation de la structure ainsi imprégnée sous atmosphère réductrice (par exemple, une atmosphère comprenant de l'hydrogène seul ou en mélange avec un gaz rare, tel que de l'argon), cette carbonisation pouvant se dérouler à une température de 1500°C.

Quels que soient les modes de réalisation et les variantes envisagés, le dépôt de la ou les compositions liquides peut être envisagée par différentes techniques, telles que :
- le trempage-retrait (connu sous la terminologie anglaise « dip-coating ») ;
- l'enduction centrifuge (connue sous la terminologie anglaise « spin-coating ») ;
- l'enduction laminaire (connue sous la terminologie anglaise « laminar-flow-coating ou meniscus coating ») ;
- la pulvérisation ou l'épandage (connue sous la terminologie anglaise « spray-coating ») ;
- l'engobage (connu sous la terminologie anglaise « slip coating») ;
- l'enduction au rouleau (connue sous la terminologie « roll to roll process ») ;
- l'enduction au pinceau (connue sous la terminologie anglaise « paint coating ») ;
- la sérigraphie (connue sous la terminologie anglaise « screen printing ») ; ou
- les techniques utilisant un couteau horizontal pour le dépôt (connue sous la terminologie anglaise « tape-coating »).

Concernant le substrat amovible, celui-ci est choisi, avantageusement, de sorte à conférer à la structure la forme souhaitée. Quant à sa nature chimique, il doit être, avantageusement, choisi de sorte à être inerte vis-à-vis des ingrédients constitutifs de la structure destinés à être déposés sur celui-ci. A titre d'exemples, le substrat peut être en verre ou en matériau polymère.

Quels que soient les modes de réalisation et les variantes envisagés, le procédé de l'invention peut comprendre, en amont du dépôt, la préparation de la ou les compositions comprenant les ingrédients constitutifs de la structure, cette préparation pouvant consister à mettre en contact ces ingrédients et à homogénéiser le mélange obtenu, par exemple, avec un mélangeur, tel qu'un dispermat.

Les structures obtenues selon le procédé de l'invention sont des structures, de par les ingrédients qu'elles contiennent, aptes à remplir à la fois le rôle d'électrode positive et le rôle de collecteur de courant.

Elles constituent également des structures autosupportées, c'est-à-dire qu'elles ne nécessitent pas d'être apposées sur un support pour être utilisées dans un accumulateur lithium-soufre.

Elles ne forment qu'une seule et même pièce, c'est-à-dire qu'elles ne résultent pas de l'adjonction d'une électrode positive et d'un collecteur de courant.

L'invention a trait ainsi à des structures faisant office à la fois d'électrode positive pour batterie lithium-soufre et de collecteur de courant susceptibles d'être obtenues par le procédé tel que défini ci-dessus.

Ces structures comprennent, avantageusement, au moins un additif carboné inorganique appartenant à la catégorie des fibres de carbone et au moins un liant polymérique. Du fait de la présence d'un liant polymérique, elles consistent ainsi en un matériau composite comprenant une matrice polymérique, dans laquelle sont dispersés les autres ingrédients. Elles ne sont donc pas assimilables à un tissu imprégné comme cela peut être le cas dans l'art antérieur.

Les fibres de carbone et les liants polymériques sont similaires à ceux décrits dans le cadre du procédé de l'invention.

Plus spécifiquement, les fibres de carbone peuvent être des fibres de carbone obtenues en phase vapeur, des fibres de carbone broyées et des mélanges de celles-ci.

Plus spécifiquement, les liants polymériques peuvent appartenir à la famille des polymères cellulosiques, la famille des polymériques éthyléniques fluorés et les mélanges de ceux-ci.

En outre, les structures de l'invention peuvent comprendre une poudre de carbone, tel que du noir de carbone.

Elles peuvent également comporter les autres ingrédients déjà mentionnés ci-dessus dans la partie relative à la description du procédé de l'invention.

Les structures obtenues selon le procédé de l'invention sont destinées à être assemblées dans un accumulateur lithium-soufre comprenant au moins une cellule comprenant :
- une structure faisant office d'électrode positive et de collecteur de courant obtenue selon le procédé de l'invention telle que définie ci-dessus ;
- une électrode négative ; et
- un électrolyte conducteur d'ions lithium disposé entre ladite structure et ladite électrode négative.

Nous précisons les définitions suivantes.

Par électrode positive, on entend, classiquement, dans ce qui précède et ce qui suit, l'électrode qui fait office de cathode, quand l'accumulateur débite du courant (c'est-à-dire lorsqu'il est en processus de décharge) et qui fait office d'anode lorsque l'accumulateur est en processus de charge.

Par électrode négative, on entend, classiquement, dans ce qui précède et ce qui suit, l'électrode qui fait office d'anode, quand l'accumulateur débite du courant (c'est-à-dire lorsqu'il est en processus de décharge) et qui fait office de cathode, lorsque l'accumulateur est en processus de charge.

L'électrode négative peut être autosupportée (c'est-à-dire ne nécessitant pas d'être apposée à un support, tel qu'un support collecteur de courant) ou peut comprendre, de préférence, un substrat collecteur de courant sur lequel est placé au moins le matériau actif de l'électrode négative, ce matériau actif pouvant être avantageusement du lithium métallique.

Le substrat collecteur de courant peut être en un matériau métallique (composé d'un seul élément métallique ou d'un alliage d'un élément métallique avec un autre élément), se présentant, par exemple, sous forme d'une plaque ou feuillard, un exemple spécifique d'un substrat collecteur en courant pouvant être une plaque en inox ou en cuivre. Le substrat collecteur de courant peut être également en un matériau carboné.

L'électrolyte est un électrolyte conducteur d'ions lithium, cet électrolyte pouvant être, en particulier, un électrolyte liquide comprenant au moins un solvant organique et au moins un sel de lithium.

Le ou les solvants organiques peuvent être, par exemple, un solvant comportant une ou plusieurs fonctions éther, nitrile, sulfone et/ou carbonate avec, par exemple, une chaîne carbonée pouvant comporter de 1 à 10 atomes de carbone.

A titre d'exemples de solvants comportant une fonction carbonate, on peut citer :
- des solvants carbonates cycliques, tel que le carbonate d'éthylène (symbolisé par l'abréviation EC), le carbone de propylène (symbolisé par l'abréviation PC).
- des solvants carbonates linéaires, tels que le carbonate de diéthyle (symbolisé par l'abréviation DEC), le carbonate de diméthyle (symbolisé par l'abréviation DMC), le carbonate d'éthylméthyle (symbolisé par l'abréviation EMC).

A titre d'exemple de solvants comportant une fonction éther, on peut citer les solvants éthers, tels que le 1,3-dioxolane (symbolisé par l'abréviation DIOX), le tétrahydrofurane (symbolisé par l'abréviation THF), le 1,2-diméthoxyéthane (symbolisé par l'abréviation DME), ou un éther de formule générale CH₃O-[CH₂CH₂O]ₙ-OCH₃ (n étant un entier allant de 1 et 10), tel que le diméthyléther de tétraéthylèneglycol (symbolisé par l'abréviation TEGDME) et les mélanges de ceux-ci.

De préférence, le solvant organique est un solvant éther ou un mélange de solvants éthers.

Le sel de lithium peut être choisi dans le groupe constitué par LiPF₆, LiClO₄, LiBF₄, LiAsF₆, Lil, LiNO₃ LiR_{f}SO₃ (avec R_{f} correspondant à un groupe perfluoroalkyle comprenant de 1 à 8 atomes de carbone), LiN(CF₃SO₂)₂ (appelé également bis[(trifluorométhyl)sulfonyl]imidure de lithium correspondant à l'abréviation LiTFSI), LiN(C₂F₅SO₂)₂ (appelé également bis[(perfluoroéthyl)sulfonyl]imidure de lithium correspondant à l'abréviation LiBETI), LiCH₃SO₃, LiB(C₂O₄)₂ (appelé également bis(oxalato)borate de lithium ou LiBOB) et les mélanges de ceux-ci, la préférence portant sur un mélange LiTFSI/LiNO₃.

Le sel de lithium peut être présent, dans l'électrolyte, selon une concentration allant de 0,25 M à 2 M, par exemple, 1M.

En outre, lorsque l'accumulateur fonctionne selon une configuration de catholyte, l'électrolyte peut comprendre au moins un composé polysulfure de lithium de formule Li₂Sₙ avec n étant un entier allant de 2 à 8, tel que Li₂S₆.

Ce composé constitue ainsi la source de soufre pour l'électrode positive.

Dans ce cas, la quantité de composé polysulfure de lithium introduite dans l'électrolyte est adaptée en fonction de la surface spécifique de la structure obtenue selon le procédé de l'invention, celle-ci dictant la quantité de matériau actif qu'il est possible de déposer. Par exemple, le composé polysulfure de lithium peut être dissous dans l'électrolyte à une concentration allant de 0,25 mol.L⁻¹ à la concentration de saturation.

L'électrolyte, lorsqu'il comprend au moins un composé polysulfure de lithium tel que défini ci-dessus, peut être qualifié de « catholyte ».

Dans les accumulateurs lithium-soufre, l'électrolyte liquide susmentionné peut être amené, dans les cellules électrochimiques des accumulateurs lithium-soufre, à imprégner un séparateur, lequel est disposé entre l'électrode positive et l'électrode négative de la cellule électrochimique.

Ce séparateur peut être en un matériau poreux, tel qu'un matériau polymérique, apte à accueillir dans sa porosité l'électrolyte liquide.

L'électrolyte peut être également un électrolyte gélifié, ce qui correspond, dans ce cas, à un électrolyte comprenant un solvant organique et un sel de lithium, similaires à ceux décrits ci-dessus, qui imprègne une matrice poreuse qui gonfle en absorbant l'électrolyte, une telle matrice pouvant être un polyoxyde d'éthylène (connu sous l'abréviation POE), un polyacrylonitrile (connu sous l'abréviation PAN), un polyméthacrylate de méthyle (connu sous l'abréviation PMMA), un polyfluorure de vinylidène (connu sous l'abréviation PVDF) et leurs dérivés.

L'invention va, à présent, être décrite en référence aux modes de réalisation particuliers définis ci-dessous en référence aux figures annexées.

### BRÈVE DESCRIPTION DES DESSINS

La figure 1 est un graphique illustrant l'évolution du potentiel E (en V) en fonction de la capacité C (en u.a).
Les figures 2-3 sont des photographies prises de dessus des structures décrites dans l'exemple expérimental 1.
La figure 4 est un graphique illustrant l'évolution du potentiel E (en V) en fonction de la capacité spécifique C (en mAh/gs) des accumulateurs décrits à l'exemple expérimental 3.

### EXPOSÉ DÉTAILLÉ DE MODES DE RÉALISATION PARTICULIERS

### Exemple 1

Le présent exemple illustre la préparation d'une structure obtenue selon un procédé conforme à l'invention.

La composition utilisée comprend les ingrédients suivants :
- 39,72 g de méthylcellulose sous forme d'une dispersion à 1,15% en masse dans l'eau (10,60% en masse dans la structure finale) ;
- 3,4 g de fibres de carbone obtenues en phase vapeur VGCF® (78,30% en masse dans la structure finale) ; et
- 0,8 g d'un tensioactif Triton® (11,10% en masse dans la structure finale).

L'extrait sec (à savoir, le pourcentage massique de produit sec dans la composition) est de 9,89 %.

La composition est mélangée à l'aide d'un Dispermat (VMA) à 6000 tours par minute pendant 30 minutes, est enduite sur une plaque de verre à l'aide d'une racle (technologie d'enduction correspondant à la terminologie anglaise « docteur blade ») puis est ensuite séchée à 80°C à l'air libre pendant 30 minutes.

La structure résultante est décollée manuellement de la plaque de verre et séchée à 95°C sous air pendant une nuit.

### Exemple 2

Le présent exemple illustre la préparation d'une structure obtenue selon un procédé conforme à l'invention.

La composition utilisée comprend les ingrédients suivants :
- 39,72 g de méthylcellulose sous forme d'une dispersion à 1,15% en masse dans l'eau (8,80 % en masse dans la structure finale) ;
- 2 g de fibres de carbone obtenues en phase vapeur VGCF® (38,20 % en masse dans la structure finale) ;
- 1,4 g de particules de carbone Vulcan® (27,80% en masse dans la structure finale) ;
- 1,23 g de dispersion de PTFE à 60% en masse dans l'eau (15% en masse dans la structure finale) ;
- 0,8 g d'un tensioactif Triton® (10,20 % en masse dans la structure finale).

L'extrait sec est de 11,45 %.

La composition est mélangée à l'aide d'un Dispermat (VMA) à 6000 tours par minute pendant 30 minutes, est enduite sur une plaque de verre à l'aide d'une racle (technologie d'enduction correspondant à la terminologie anglaise « doctor blade ») puis est ensuite séchée à 80°C à l'air libre pendant 30 minutes.

La structure résultante est décollée manuellement de la plaque de verre et séchée à 95°C sous air pendant une nuit.

Au final, la structure résultante est frittée à 350°C pendant 30 minutes sous air.

### Exemple comparatif 1

Un feutre non-tissé de carbone (H2315V1, Freudenberg) a été acheté chez le fabricant. Il est rincé à l'eau et séché sous air à 95°C.

### Exemple expérimental 1

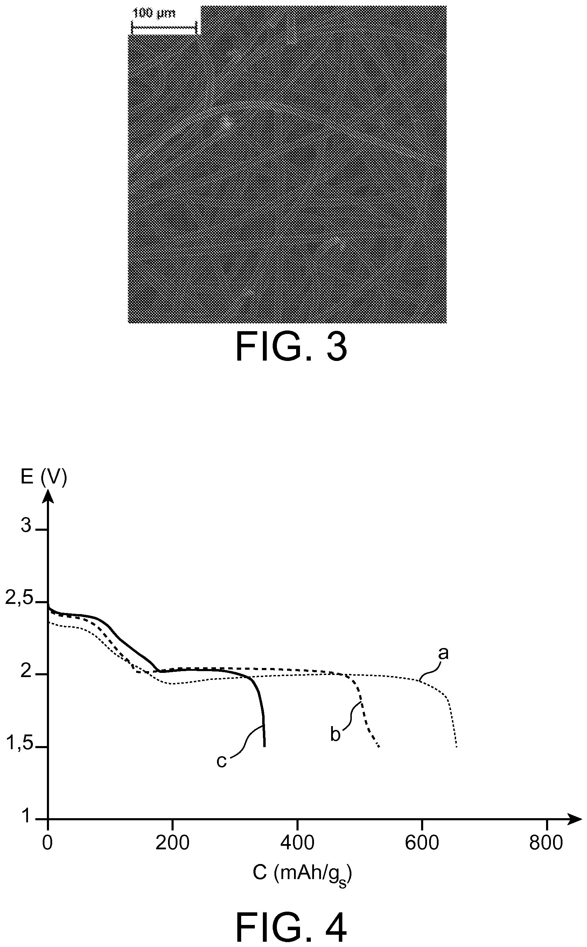

Un microscope électronique à balayage (LEO 1530 FEG-SEM) a été utilisé pour obtenir des images des structures obtenues aux exemples 1 et comparatif 1. Les figures 2 et 3 montrent clairement que la morphologie et la taille des pores des structures obtenues sont influencées par la formulation et se différencient du produit commercial (respectivement figure 2 pour le matériau obtenu à l'exemple 1 et figure 3 pour le matériau obtenu à l'exemple comparatif 1).

### Exemple expérimental 2

La valeur de masse volumique des structures obtenues aux exemples 1, 2 et comparatif 1 a été déterminée, ladite masse volumique correspondant à la masse de la structure considérée (obtenue par pesée de disques de 14 mm de diamètre découpés dans les structures obtenues auxdits exemples susmentionnés) et son volume (obtenue par mesure des dimensions du disque à l'aide d'une jauge micrométrique). La mesure a été reproduite 10 fois et ses résultats sont reportés sur le Tableau 1 ci-dessous.

La valeur de surface active a été obtenue à travers une mesure d'adsorption-désorption de gaz à 77K. Les surfaces BET obtenues sont aussi reportées dans le Tableau 1.

| Structure | Masse volumique (g.cm⁻³) | Surface active (m².g⁻¹) |
|---|---|---|
| Exemple 1 | 0,25 ± 0,05 | 7,12 ± 0,43 |
| Exemple 2 | 0,26 ± 0,01 (avant frittage) | Non mesurée |
| | 0,19 ± 0,02 (après frittage) | |
| Exemple Comparatif 1 | 0,46 ± 0,01 | < Limite de détection |

### Exemple expérimental 3

Des disques de 14 mm de diamètre ont été découpés dans les structures obtenus aux exemples 1, 2 et comparatif 1, et séchés sous vide (20 torr) à 80°C pendant 48 heures. Ensuite, ils ont été intégrés, en tant qu'électrode positive, dans un accumulateur de type "pile bouton" (CR2032) ainsi construit :
- une électrode négative de lithium de 130 µm d'épaisseur, découpée au diamètre 16 mm et déposée sur un disque d'inox servant de collecteur de courant ;
- une électrode positive ;
- un séparateur Celgard® 2400 et un séparateur Viledon®, imbibés d'un électrolyte liquide à base du sel LiTFSI (1 mol.L⁻¹), LiNO₃ (0,1 mol.L⁻¹) et Li₂S₆ (0,25 mol.L⁻¹) en solution dans un mélange 50/50 en volume de TEGDME (tétraéthylène glycol diméthyléther) - DIOX (Dioxolane).

La quantité de soufre et la capacité nominale de l'accumulateur s'élèvent, respectivement, à 7,20 mg (4,68 mgs.cm⁻¹) et 12,06 mAh.

Après assemblage, l'accumulateur ainsi réalisé est scellé sous atmosphère inerte et testé lors d'un cyclage galvanostatique à C/20.

Les courbes de cyclage des accumulateurs réalisés avec les matériaux des exemples 1, 2 et comparatif 1 sont présentées sur la Figure 4 (respectivement courbes a), b), c) pour les accumulateurs réalisés avec les structures des exemples 1, 2 et comparatif 1) et dans le Tableau 2. La capacité de stockage massique est clairement influencée par la formulation utilisée et la surface active de la structure finale, et est visiblement améliorée par l'utilisation des structures obtenues conformément au procédé de l'invention (≥ 600 contre ≈400 mAh.g⁻¹ lors du premier cycle).

| Structure | Exemple 1 | Exemple 2 | Exemple Comparatif 1 |
|---|---|---|---|
| Capacité massique (mAh.gₛ) au cycle 30 | 560 | 530 | 200 |

## Revendications

1. Procédé de préparation d'une structure faisant office, à la fois, d'électrode positive et de collecteur de courant d'accumulateur lithium-soufre fonctionnant dans une configuration du type « catholyte » ou contenant en son sein un matériau actif soufré, ledit procédé comprenant les opérations suivantes :
- dépôt d'une ou plusieurs compositions liquides comprenant les ingrédients constitutifs de cette structure sur un substrat amovible ;
- séchage de la ou les compositions déposées ;
- séparation du substrat amovible de la structure ainsi obtenue, laquelle constitue la structure faisant office, à la fois, d'électrode positive pour batterie lithium-soufre et de collecteur de courant,
dans lequel :
- lorsque la structure est destinée à entrer dans la constitution d'un accumulateur lithium-soufre fonctionnant dans une configuration du type « catholyte », le dépôt consiste à déposer sur le substrat amovible une seule composition liquide comprenant les ingrédients constitutifs de ladite structure ; ou
- lorsque la structure contient en son sein un matériau actif soufré, le dépôt consiste à déposer sur le substrat amovible une seule composition comprenant les ingrédients constitutifs de ladite structure, y compris, dans ce cas, un matériau actif soufré ; ou
- lorsque la structure contient en son sein un matériau actif soufré, le dépôt consiste à déposer sur le substrat amovible une première composition comprenant les ingrédients constitutifs de ladite structure hormis le matériau actif soufré et une deuxième composition comprenant le matériau actif soufré, un séchage pouvant être intercalé entre les deux compositions déposées ; ou
- lorsque la structure contient en son sein un matériau actif soufré, le dépôt consiste à déposer sur le substrat amovible une composition comprenant les ingrédients constitutifs de ladite structure hormis le matériau actif soufré, le matériau actif soufré étant introduit dans la structure après séparation du substrat amovible.

2. Procédé selon la revendication 1, dans lequel les ingrédients constitutifs de ladite structure sont les suivants :
- au moins un additif carboné inorganique ;
- au moins un liant polymérique ;
- éventuellement, un matériau actif soufré.

3. Procédé selon la revendication 2, dans lequel l'additif carboné inorganique est choisi parmi les fibres de carbone, les poudres de carbone et les mélanges de celles-ci.

4. Procédé selon la revendication 3, dans lequel les fibres de carbone sont des fibres de carbone broyées, des fibres de carbone obtenues en phase vapeur et des mélanges de celles-ci.

5. Procédé selon la revendication 3, dans lequel les poudres de carbone sont du noir de carbone.

6. Procédé selon l'une quelconque des revendications 2 à 5, dans lequel le liant polymérique est choisi parmi :
- des liants polymériques appartenant à la catégorie des polymères cellulosiques ;
- des liants appartenant à la catégorie des polymères éthyléniques fluorés ;
- des liants appartenant à la catégorie des polymères vinyliques ; ou
- des mélanges de ceux-ci.

7. Procédé selon l'une quelconque des revendications précédentes, dans lequel la ou les compositions mentionnées dans l'étape a), comprennent au moins un tensioactif et, éventuellement, un agent porogène.

8. Procédé selon l'une quelconque des revendications précédentes, comprenant, en outre, après le séchage, une étape de frittage sous air de la structure obtenue et/ou une étape d'imprégnation de la structure obtenue par une résine suivie d'une étape de carbonisation de la structure ainsi imprégnée sous atmosphère réductrice.

9. Procédé selon l'une quelconque des revendications précédentes, dans lequel le substrat amovible est en verre ou en matériau polymère.

10. Structure faisant office à la fois d'électrode positive pour batterie lithium-soufre et de collecteur de courant susceptible d'être obtenue par le procédé tel que défini selon l'une quelconque des revendications 1 à 9.

11. Structure selon la revendication 10, qui comprend au moins un additif carboné inorganique appartenant à la catégorie des fibres de carbone et au moins un liant polymérique.

12. Structure selon la revendication 11, dans laquelle les fibres de carbone sont des fibres de carbone obtenues en phase vapeur, des fibres de carbone broyées et les mélanges de celles-ci.

13. Structure selon la revendication 11 ou 12, dans laquelle le liant polymérique appartient à la famille des polymères cellulosiques, la famille des polymériques éthyléniques fluorés et les mélanges de ceux-ci.

14. Structure selon l'une quelconque des revendications 10 à 13, comprenant, en outre, une poudre de carbone, tel que du noir de carbone.

15. Accumulateur lithium soufre comprenant au moins une cellule comprenant :
- une structure faisant office d'électrode positive et de collecteur de courant telle que définie selon l'une quelconque des revendications 10 à 14;
- une électrode négative ; et
- un électrolyte conducteur d'ions lithium disposé entre ladite structure et ladite électrode négative.

## Patentansprüche

1. Verfahren zur Herstellung einer Struktur, die gleichzeitig als positive Elektrode und als Stromkollektor eines Lithium-Schwefel-Akkumulators wirkt, der in einer Konfiguration vom Typ "Katholyt" funktioniert oder in seinem Inneren ein aktives Schwefelmaterial enthält, wobei das Verfahren die folgenden Operationen umfasst:
- Aufbringen von einer oder mehreren flüssigen Zusammensetzungen, die die Bestandteilsingredienzien dieser Struktur umfassen, auf ein abnehmbares Substrat;
- Trocknen der aufgebrachten Zusammensetzung(en);
- Separieren des abnehmbaren Substrats von der derart erhaltenen Struktur, die die Struktur bildet, die gleichzeitig als positive Elektrode für eine Lithium-Schwefel-Batterie und als Stromkollektor wirkt,
wobei:
- wenn die Struktur dazu ausgelegt ist, in die Gestaltung eines Lithium-Schwefel-Akkumulators einzugehen, der in einer Konfiguration vom Typ "Katholyt" wirkt, die Aufbringung darin besteht, auf das abnehmbare Substrat eine einzige flüssige Zusammensetzung aufzubringen, die die Bestandteilsingredienzien der Struktur umfasst; oder
- wenn die Struktur in ihrem Inneren ein aktives Schwefelmaterial enthält, die Aufbringung darin besteht, auf das abnehmbare Substrat eine einzige Zusammensetzung aufzubringen, die die Bestandteilsingredienzien der Struktur umfasst, einschließlich in diesem Fall eines aktiven Schwefelmaterials; oder
- wenn die Struktur in ihrem Inneren ein aktives Schwefelmaterial enthält, die Aufbringung darin besteht, auf das abnehmbare Substrat eine erste Zusammensetzung aufzubringen, die die Bestandteilsingedienzien der Struktur umfasst, ausgenommen das aktive Schwefelmaterial, sowie eine zweite Zusammensetzung, die das aktive Schwefelmaterial umfasst, wobei eine Trocknung zwischen die zwei aufgebrachten Zusammensetzungen eingefügt werden kann; oder
- wenn die Struktur in ihrem Inneren ein aktives Schwefelmaterial enthält, die Aufbringung darin besteht, auf das abnehmbare Substrat eine Zusammensetzung aufzubringen, die die Bestandteilsingredienzien der Struktur umfasst, ausgenommen das aktive Schwefelmaterial, wobei das aktive Schwefelmaterial in die Struktur nach der Separation des abnehmbaren Substrats eingebracht wird.

2. Verfahren nach Anspruch 1, bei dem die Bestandteilsingredienzien der Struktur die Folgenden sind:
- wenigstens ein anorganisches Kohlenstoffadditiv;
- wenigstens ein Polymerbinder;
- gegebenenfalls ein aktives Schwefelmaterial.

3. Verfahren nach Anspruch 2, bei dem das anorganische Kohlenstoffadditiv ausgewählt ist aus den Kohlenstofffasern, den Kohlenstoffpulvern und deren Mischungen.

4. Verfahren nach Anspruch 3, bei dem die Kohlenstofffasern zerkleinerte Kohlenstofffasern sind, in Dampfphase erhaltene Kohlenstofffasern und deren Mischungen.

5. Verfahren nach Anspruch 3, bei dem die Kohlenstoffpulver Kohlenstoffschwarz sind.

6. Verfahren nach einem der Ansprüche 2 bis 5, bei dem der Polymerbinder ausgewählt ist aus:
- Polymerbindern, die zur Kategorie der Zellulosepolymere gehören;
- Bindern, die zur Kategorie der fluorierten Ethylenpolymere gehören;
- Bindern, die zur Kategorie der Vinylpolymere gehören; oder
- deren Mischungen.

7. Verfahren nach einem der vorhergehenden Ansprüche, bei der die im Schritt a) erwähnte(n) Zusammensetzung(en) wenigstens ein Tensid und gegebenenfalls ein porogenes Agens umfassen.

8. Verfahren nach einem der vorhergehenden Ansprüche, ferner umfassend nach dem Trocknen einen Schritt des Sinterns der erhaltenen Struktur an Luft und/oder einen Schritt des Imprägnierens der erhaltenen Struktur mittels eines Harzes, gefolgt von einem Schritt der Karbonisierung der derart imprägnierten Struktur in einer reduzierenden Atmosphäre.

9. Verfahren nach einem der vorhergehenden Ansprüche, bei dem das abnehmbare Substrat aus Glas oder aus einem Polymermaterial ist.

10. Struktur, die gleichzeitig als positive Elektrode für eine Lithium-Schwefel-Batterie und als Stromkollektor wirkt, die erhältlich ist durch das Verfahren wie in einem der Ansprüche 1 bis 9 definiert.

11. Struktur nach Anspruch 10, die wenigstens ein anorganisches Kohlenstoffadditiv umfasst, das zur Kategorie der Kohlenstofffasern gehört, sowie wenigstens einen Polymerbinder.

12. Struktur nach Anspruch 11, bei dem die Kohlenstofffasern in Dampfphase erhaltene Kohlenstofffasern, zerkleinerte Kohlenstofffasern und deren Mischungen sind.

13. Struktur nach Anspruch 11 oder 12, bei der der Polymerbinder zur Familie der Zellulosepolymere, zur Familie der fluorierten Ethylenpolymere und deren Mischungen gehört.

14. Struktur nach einem der Ansprüche 10 bis 13, ferner umfassend ein Kohlenstoffpulver wie zum Beispiel Kohlenstoffschwarz.

15. Lithium-Schwefel-Akkumulator, umfassend wenigstens eine Zelle, die Folgendes umfasst:
- eine Struktur, die als positive Elektrode und als Stromkollektor wirkt, wie in einem der Ansprüche 10 bis 14 definiert;
- eine negative Elektrode; und
- einen lithiumionenleitenden Elektrolyt, der zwischen der Struktur und der negativen Elektrode angeordnet ist.

## Claims

1. A process for preparing a structure both acting as a positive electrode and a current collector for a lithium-sulphur battery operating in a "catholyte" type configuration or containing a sulphur active material therein, said process comprising the following operations of:
- depositing one or more liquid compositions comprising the components of this structure onto a removable substrate;
- drying the composition(s) deposited;
- separating the removable substrate from the structure thus obtained, which is the structure both acting as a positive electrode for a lithium-sulphur battery and a current collector,
wherein:
- when the structure is for being part of the composition of a lithium-sulphur accumulator operating in a "catholyte" type configuration, the depositing consists in depositing onto the removable substrate a single liquid composition comprising the components of said structure; or
- when the structure contains a sulphur active material therein, the depositing consists in depositing onto the removable substrate a single composition comprising the components of said structure, including, in this case, a sulphur active material; or
- when the structure contains a sulphur active material therein, the depositing consists in depositing onto the removable substrate a first composition comprising the components of said structure except for the sulphur active material and a second composition comprising the sulphur active material, wherein a drying can be interposed between both compositions deposited; or
- when the structure contains a sulphur active material therein, the depositing consists in depositing onto the removable substrate a composition comprising the components of said structure except for the sulphur active material, the sulphur active material being introduced into the structure after separating the removable substrate.

2. The process according to claim 1, wherein the components of said structure are the following ones:
- at least one inorganic carbon additive;
- at least one polymeric binder;
- optionally, a sulphur active material.

3. The process according to claim 2, wherein the inorganic carbon additive is chosen from carbon fibres, carbon powders and mixtures thereof.

4. The process according to claim 3, wherein the carbon fibres are milled carbon fibres, carbon fibres obtained in vapour phase and mixtures thereof.

5. The process according to claim 3, wherein the carbon powders are carbon black.

6. The process according to any of claims 2 to 5, wherein the polymeric binder is chosen from:
- polymeric binders belonging to the cellulosic polymer category;
- binders belonging to the fluorinated ethylenic polymer category;
- binders belonging to the vinylic polymer category; or
- mixtures thereof.

7. The process according to any of the preceding claims, wherein the composition(s) mentioned in step a) comprise(s) at least one surfactant and, optionally, a pore forming material.

8. The process according to any of the preceding claims, further comprising, after drying, a step of air sintering the structure obtained and/or a step of impregnating the structure obtained with a resin followed by a step of carbonising the structure thus impregnated under a reducing atmosphere.

9. The process according to any of the preceding claims, wherein the removable substrate is of glass or of polymeric material.

10. A structure both acting as a positive electrode for a lithium-sulphur battery and a current collector likely to be obtained by the process as defined in any of claims 1 to 9.

11. The structure according to claim 10, which comprises at least one inorganic carbon additive belonging to the carbon fibre category and at least one polymeric binder.

12. The structure according to claim 11, wherein the carbon fibres are carbon fibres obtained in vapour phase, milled carbon fibres and mixtures thereof.

13. The structure according to claim 11 or 12, wherein the polymeric binder belongs to the cellulosic polymer family, the fluorinated ethylenic polymer family and mixtures thereof.

14. The structure according to any of claims 10 to 13, further comprising a carbon powder, such as carbon black.

15. A lithium-sulphur accumulator comprising at least one cell comprising:
- a structure acting as a positive electrode and a current collector as defined in any of claims 10 to 14;
- a negative electrode; and
- a lithium-ion conducting electrolyte disposed between said structure and said negative electrode.
